# EUROPEAN PATENT SPECIFICATION

(11) **EP 3 991 566 B1**
(45) Date of publication and mention of the grant of the patent: **25.03.2026**
(21) Application number: 21382984.9
(22) Date of filing: 02.11.2021
(51) Int. Cl.: A23G 9/50, B65D 3/06, B65D 85/78

(54) **METHOD FOR DETECTING DOUBLE OR MULTIPLE CONTAINER DEFECT**
VERFAHREN ZUR ERKENNUNG VON DEFEKTEN DOPPELTEN ODER MEHRFACHEN BEHÄLTERN
MÉTHODE DE DÉTECTION D'UN DÉFAUT DE DOUBLE OU MULTIPLE CONTENEUR

(30) Priority: 03.11.2020 ES 202032365 U
(43) Date of publication of application: 04.05.2022
(73) Proprietor: D'Hoore, Dick Prosper, 43205 Reus (Tarragona) (ES)
(72) Inventor: RIBERA RUIZ, Jordi, 43205 REUS (Tarragona) (ES); SABATÉ CAMPS, Francesc, 43205 REUS (Tarragona) (ES)
(74) Representative: Herrero & Asociados, S.L.

(56) References cited:
- WO-A1-2018/037027
- DE-U1- 202015 008 330
- US-A- 1 690 556
- US-A1- 2008 248 169

## Description

The present invention refers to a method for detecting double or multiple container defects, in particular in sheet containers of conical or truncated cone shape, for use with conical shaped ice cream.

### Background of the invention

In the ice cream industries, for the production of conical ice cream (cones), stacks of product are used, consisting alternately of a cone-shaped container and a biscuit cone.

In automated processes for the preparation of stacks of cone-shaped containers with biscuit cones, it is possible for dosing defects to occur, resulting in two cone-shaped containers for one biscuit cone or multiple cone-shaped containers for one biscuit cone within the product stacks.

If there is a defect in two cone-shaped containers, they are very close to each other, with a gap comprising between 0.8 mm and 2.5 mm approximately. This gap is so small due to the small thickness of the material used and the conical shape of the cone-shaped containers.

The automatic processes of preparing stacks of cone-shaped containers with biscuit cones are high-capacity, high-speed processes, which makes it difficult to detect defects.

Cone-shaped containers are flexible sheet containers, which makes it difficult to detect defects in double cone-shaped containers using mechanical means such as contact feelers, or with volume, surface or length measurement systems using sensors or machine vision systems.

Cone-shaped containers are very lightweight containers, which means that it is not possible to detect defects in double cone-shaped containers in the automatic stacking process by weight difference.

Cone-shaped containers are revolution products (cone), which can rotate about their axis very easily. In automatic processes they do not have a fixed position, which gives an infinite number of views for the same design.

An infinite number of designs are possible in cone-shaped containers. Due to the two previous aspects, it is impossible, with the current designs, the use of patterns in artificial vision systems, to detect the defects of double cone-shaped containers.

Quality standards in society and in the ice cream industry in particular are becoming more and more demanding. There are no methods that allow an acceptable detection rate of these defects in the industrial automatic processes of preparing stacks of cone-shaped containers with biscuit cones.

US2008248169A1 discloses a multi-colored baked cake cone typically for holding ice cream or other confection novelties. This cone is made of a dough bi-layer that includes at least a first layer of a conventional cake dough that contains sugar and a second layer of a modified cake dough that imparts at least one color other than brown to the cone after baking.

DE202015008330U1 discloses a cone with a shape tapering downwards, which widens upwards along a conical or pyramidal casing standing on the tip, comprising two layers, and of which the outer layer is designed to be translucent in some areas, with one or more lighting means being arranged between the two layers, which light up when activated and the outer layer of the jacket or at least a translucent area of the same shine through without being visible from the outside.

WO2018037027A1 discloses a conical cone sleeve for frozen confections, comprising a bottom tip and an upper rim, and said upper rim forms a circular opening suitable for receiving a lid, wherein the cone sleeve comprises weakening lines defining a tear strip with a tear tab on its upper part, and the cone sleeve further comprises at least two openings, at least one on each side of the tear strip defining the tear tab part of the tear strip.

### Description of the invention

Therefore, an objective of the present invention as defined in claim 1 is to provide a method for detecting
double or multiple container defects, in which dosage defects which may occur in the automatic process of assembling the containers with the biscuit cones can be detected.

Specifically, it is intended to facilitate the detection of double or multiple conical containers produced in the dosage. This defect in the dosing of the conical containers produces a quality defect in the subsequent process of filling the ice cream, specifically in the closing of the container, and a quality defect for the consumer by making it more difficult to open the product to be able to consume it.

With the method of the invention the above-mentioned disadvantages are solved, presenting other advantages which will be described below.

The method according to the present invention is defined in claim 1. Advantageously, the sheet container comprises a plurality of marks placed around the opening of the sheet container.

According to different options:
- each mark is formed by two straight lines;
- each mark is formed by two straight lines joined together at one end, forming a V shape;
- each mark is formed by two straight lines joined together at one end by a curved line;
- each mark is formed by two straight lines and a figure, that figure being, for example, a 2D code; and
- each mark is formed by a triangle that defines two lines.

### Brief description of the drawings

For a better understanding of what has been explained above, some drawings are included in which, schematically and only as a non-limiting example, a practical case of embodiment is shown.
Figures 1 to 6 are elevation views of several embodiments of the sheet container used in the method according to the present invention;
Figures 7A to 7D are elevation views of stacks of product alternately formed by a sheet container used in the method according to the present invention and a biscuit cone, wherein Figure 7A is a defect-free stack, and Figures 7B to 7D are examples of stacks with defects, with different rotation of the container; and
Figures 8A to 8C are details of the stack defects in Figures 7B, 7C, and 7D, respectively.

### Description of preferred embodiments

According to the embodiments shown, the sheet container used in the method according to the present invention, indicated in general by reference numeral 1, is conical or truncated cone-shaped, is hollow, is provided with an opening 2, and is made from a single material (for example, paper or plastic, ...) or usually of paper-aluminium, paper-plastic, aluminium-paper-plastic, or the like.

The container 1 usually acts as a protective means for a biscuit cone (cornet), which in turn contain an edible ice cream.

The container 1 comprises marks 3 (for example, straight or curved lines and/or figures) to enable the detection of double or multiple container defects, so as to be able to correct these defects and to supply a better quality product.

Double or multiple container defects means providing two or more containers one inside the other to a production line.

These marks 3 are placed around the opening 2 of the container 1, which is the area where double or multiple container defects can be seen.

Due to the possible rotation of the containers 1, a plurality of marks 3 are preferably made distributed around the entire opening 2, so that at any of the angles of rotation at least two of the marks 3, with an angle of inclination different from each other, are correctly detectable.

For this purpose, at least one of the detectable marks 3 must have an inclination, i.e. not perpendicular to the edge 4 defined by the opening 2 of the container 1.

According to one embodiment, the marks 3 are figures, in the same area, and repeated several times so as to be visible at any angle of rotation. In this embodiment, the figure must define at least two lines in contact with the edge 4 defined by the opening 2 with different inclination, and at least one of these lines must have a non-perpendicular inclination with respect to the edge 4 defined by the opening 2.

The marks 3 can be made using one or a combination of the following techniques: printing, heat treatment, chemical treatment, mechanical treatment, laser and/or any other technique deemed appropriate. If printing is used to produce the marks 3, the inks used may be visible or invisible inks (UV inks, IR inks).

The marks 3 can be combined by integrating them into the design with coding systems, barcodes, 2D codes or similar.

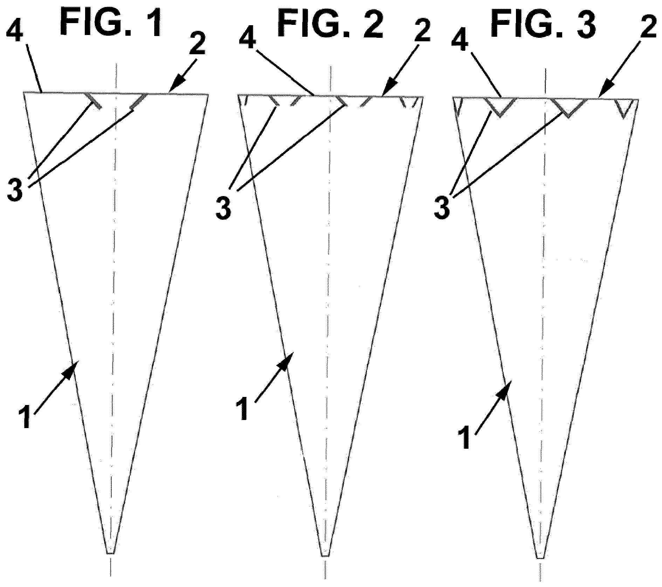

Figures 1 to 6 show several embodiments of the sheet container used in the method according to the present invention, with different types of marks 3.

In particular:
In figure 1, the marks 3 are formed by straight lines of different inclination.
In figure 2, the marks 3 are also formed by straight lines of different inclination, but in a greater number than in the embodiment of figure 1.
In figure 3, the marks 3 are also formed by straight lines of different inclination, but they form a V-shape.

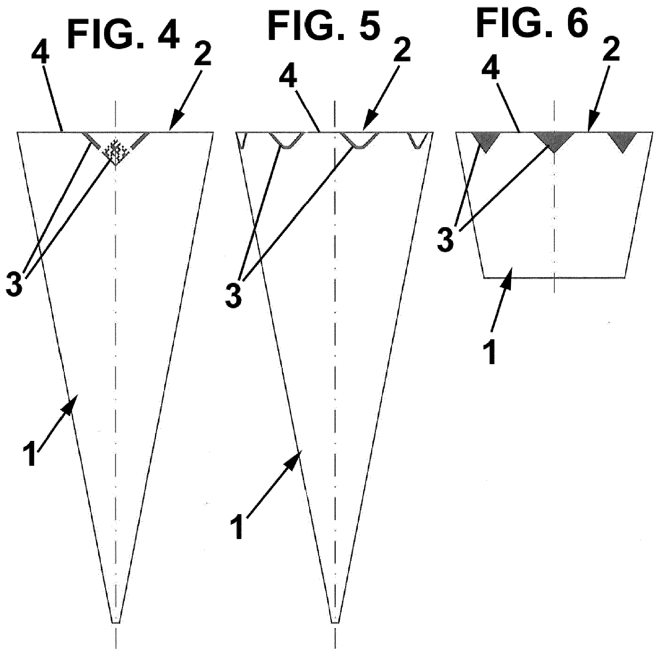

In figure 4, the marks 3 comprise straight lines and a 2D code.
In figure 5, the marks 3 comprise curved lines.
In figure 6, the marks 3 are triangular in shape.

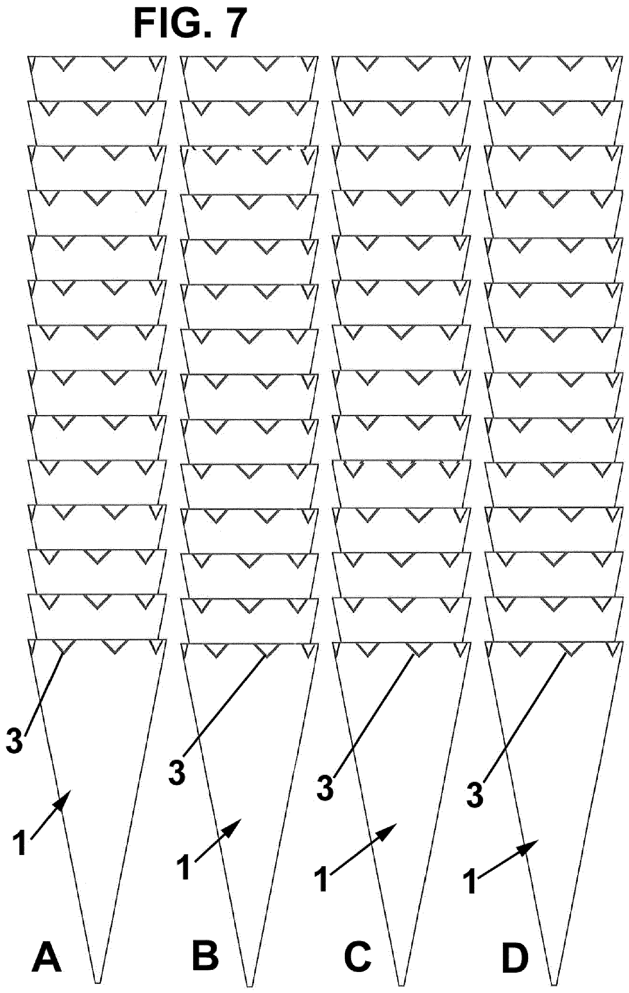

Figures 7A to 7D show stacks of product alternately formed by a sheet container 1 and a biscuit cone, wherein Figure 7A is a defect-free stack, and Figures 7B to 7D are examples of defect stacks, with different rotation of the container.

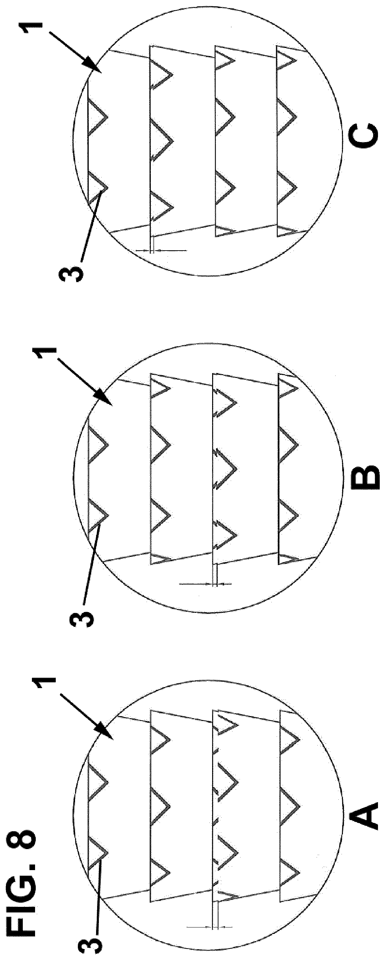

As can be seen in greater detail in Figures 8A to 8C, which are details of the stack defects of Figures 7B, 7C and 7D, respectively, it can be seen at a glance whether there are two or more containers one inside the other.

## Claims

1. Method for detecting double or multiple container defects, wherein each container is a sheet container (1), conical or truncated cone-shaped with a biscuit cone, comprising an opening (2) defining an edge (4), and at least one mark (3) formed by at least two lines, the at least two lines being inclined with respect to the edge (4) defined by the opening (2),
wherein the sheet container comprises a plurality of marks (3) positioned around the opening (4) of the sheet container (1),
the method comprising the step of seeing the marks (3) placed around the opening (2) of the container (1), so that when only a portion of the marks (3) is visible, a double or multiple container defect is detected, in which two or more containers are one inside the other.

2. Method according to claim 1, wherein each mark (3) comprises two straight lines.

3. Method according to claim 2, wherein each mark (3) is formed by two straight lines joined together at one end, forming a V.

4. Method according to claim 2, wherein each mark (3) is formed by two straight lines joined together at one end by a curved line.

5. Method according to claim 1, wherein each mark (3) is formed by two straight lines and a figure.

6. Method according to claim 5, wherein said figure is a 2D code.

7. Method according to claim 1, wherein each mark (3) is formed by a triangle defining two lines.

## Patentansprüche

1. Verfahren zum Erkennen von doppelten oder mehrfachen Behälterfehlern, wobei jeder Behälter ein Blechbehälter (1) ist, konisch oder kegelstumpfförmig mit einem Biskuit-Kegel, der eine Öffnung (2) umfasst, die eine Kante (4) definiert, und mindestens eine Markierung (3), die aus mindestens zwei Linien gebildet ist, wobei die mindestens zwei Linien in Bezug auf die durch die Öffnung (2) definierte Kante (4) geneigt sind,
wobei der Blechbehälter eine Vielzahl von Markierungen (3) umfasst, die um die Öffnung (4) des Blechbehälters (1) herum angeordnet sind,
wobei das Verfahren den Schritt des Erkennens der Markierungen (3) umfasst, die um die Öffnung (2) des Behälters (1) herum angeordnet sind, so dass, wenn nur ein Teil der Markierungen (3) sichtbar ist, ein doppelter oder mehrfacher Behälterdefekt erkannt wird, bei dem zwei oder mehr Behälter ineinandergesteckt sind.

2. Verfahren nach Anspruch 1, wobei jede Markierung (3) durch ein Dreieck gebildet wird, das zwei Linien definiert.

3. Verfahren nach Anspruch 2, wobei jede Markierung (3) durch zwei gerade Linien gebildet wird, die an einem Ende miteinander verbunden sind und eine V-Form bilden.

4. Verfahren nach Anspruch 2, wobei jede Markierung (3) aus zwei geraden Linien besteht, die an einem Ende durch eine gekrümmte Linie miteinander verbunden sind.

5. Verfahren nach Anspruch 1, wobei jede Markierung (3) durch zwei gerade Linien und eine Figur gebildet wird.

6. Verfahren nach Anspruch 5, wobei die Figur ein 2D-Code ist.

7. Verfahren nach Anspruch 1, wobei jede Markierung (3) durch ein Dreieck gebildet wird, das zwei Linien definiert.

## Revendications

1. Méthode de détection d'un défaut de double ou multiple conteneur, dans laquelle chaque conteneur est un conteneur en feuille (1), conique ou tronconique avec un cornet de biscuit, comprenant une ouverture (2) définissant un bord (4), et au moins une marque (3) formée par au moins deux lignes, les au moins deux lignes étant inclinées par rapport au bord (4) défini par l'ouverture (2),
dans laquelle le conteneur en feuille comprend une pluralité de marques (3) positionnées autour de l'ouverture (4) du conteneur en feuille (1),
la méthode comprenant l'étape consistant à observer les marques (3) placées autour de l'ouverture (2) du conteneur (1), de sorte que, lorsque seulement une partie des marques (3) est visible, un défaut de double ou multiple conteneur est détecté, dans lequel deux conteneurs ou plus sont l'un dans l'autre.

2. Méthode selon la revendication 1, dans laquelle chaque marque (3) comprend deux lignes droites.

3. Méthode selon la revendication 2, dans laquelle chaque marque (3) est formée par deux lignes droites jointes ensemble au niveau d'une extrémité, formant un V.

4. Méthode selon la revendication 2, dans laquelle chaque marque (3) est formée par deux lignes droites jointes ensemble au niveau d'une extrémité par une ligne incurvée.

5. Méthode selon la revendication 1, dans laquelle chaque marque (3) est formée par deux lignes droites et une figure.

6. Méthode selon la revendication 5, dans laquelle ladite figure est un code 2D.

7. Méthode selon la revendication 1, dans laquelle chaque marque (3) est formée par un triangle définissant deux lignes.
